# EUROPÄISCHE PATENTANMELDUNG

(11) **EP 2 249 058 A2**
(43) Veröffentlichungstag der Anmeldung: **10.11.2010**
(21) Anmeldenummer: 10161548.2
(22) Anmeldetag: 30.04.2010
(51) Int. Cl.: F16F 9/32, F16F 9/54

(54) **Kolben-Zylinder-Aggregat mit einem Anschlussorgan**

(30) Priorität: 07.05.2009 DE 102009002891
(71) Anmelder: ZF Friedrichshafen AG, 88038 Friedrichshafen (DE)
(72) Erfinder: Zeissner, Bernd, 97332, Volkach (DE); Schöpplein, Rainer, 97422, Schweinfurt (DE); Hegmann, Michael, 97453, Schonungen (DE); Weingärtner, Bernhard, 97478, Oberschwappach (DE); Breun, Wolfgang, 97464, Niederwerrn (DE); Schömig, Thomas, 97464, Niederwerrn (DE); Stretz, Klaus, 97437, Haßfurt (DE); Rölleke, Hartmut, 57635, Kircheib (DE); Sydekum, Heinz, 97456, Dittelbrunn (DE)

(57) **Zusammenfassung**

Kolben-Zylinder-Aggregat (1), umfassend einen Zylinder (3), in dem eine Kolbenstange (5) axial beweglich gelagert ist, und an einem Boden des Zylinders ein Anschlussorgan aus Kunststoff formschlüssig mit dem Zylinder axial fixiert ist, wobei das Anschlussorgan (11) einen zylindrischen Befestigungsabschnitt (27) aufweist, an dem die formschlüssige Verbindung mit dem Zylinder ausgeführt ist, wobei der zylindrische Befestigungsabschnitt des Anschlussorgans auf seiner äußeren Mantelfläche (19) einen Hüllkörper (21) aufweist, der unlösbar mit dem Anschlussorgan verbunden ist, und auf seiner äußeren Oberfläche eine Profilierung (23) aufweist, die mit einem Bauteil des Kolben-Zylinder-Aggregats eine Formschlussverbindung bildet.

## Beschreibung

Die Erfindung betrifft ein Kolben-Zylinder-Aggregat mit einem Anschlussorgan gemäß dem Oberbegriff von Patentanspruch 1.

Aus der US 3 343 833 ist ein Schwingungsdämpfer bekannt, dessen Hauptkomponenten aus Kunststoff gefertigt sind. Dabei ist ein Zylinder einteilig mit einem Boden und einem Anschlussorgan ausgeführt. Diese Bauweise ist jedoch nur bedingt auf eine variantenreiche Serie anwendbar, da für jede Zylinderlänge ein separates Spritzgusswerkzeug hergestellt werden müsste.

Die DE 23 66 252 B2 betrifft ein Kolben-Zylinder-Aggregat, dessen Anschlussorgane aus Kunststoff gefertigt sind. Diese Bauweise ermöglicht den Einsatz von einfachen Zylindern, die sich sehr einfach auf Länge zurichten lassen. Wie man leicht erkennt, unterscheiden sich die Anschlussorgane hinsichtlich der Befestigung am Zylinder und an der Kolbenstange.

Das kolbenstangenseitige Befestigungselement verfügt über ein Gewinde, dass mit einem Gewindezapfen der Kolbenstange in Eingriff gebracht werden kann. Leider ist diese Art der Befestigung nicht hoch belastbar. Abhilfe bringt eine Lösung gemäß der DE 195 03 499 C1, die ein Gelenkauge beschreibt, das eine metallische Armierungshülse zur Verstärkung der Verbindung zwischen der Kolbenstange und dem Gelenkauge aufweist. Zwar werden die Tragkraftanforderungen von einem derartigen Gelenkauge erfüllt, jedoch stellt sich das Problem der Gewindesicherung gegen ungewolltes Lösen.

Das bodenseitige Anschlussorgan ist in der DE 23 66 252 B2 axial zwischen einem Zylinderboden und einem umgebördelten Rand des Zylinders verspannt. Dafür muss das bodenseitige Anschlussorgan einen umlaufenden Absatz aufweisen.

Die Aufgabe der vorliegenden Erfindung besteht darin, ein Kolben-Zylinder-Aggregat mit einem Anschlussorgan aus Kunststoff derart weiter zu entwickein, dass einerseits die geforderten Tragkraftanforderungen erfüllt werden und andererseits die Variabilität hinsichtlich der Herstellung unterschiedlicher Zylinderlängen erhalten bleibt.

Erfindungsgemäß wird die Aufgabe dadurch gelöst, dass der zylindrische Befestigungsabschnitt auf seiner äußeren Mantelfläche einen Hüllkörper aufweist, der unlösbar mit dem Anschlussorgan verbunden ist, und auf seiner äußeren Oberfläche eine Profilierung aufweist, die mit einem Bauteil des Kolben-Zylinder-Aggregats eine Formschlussverbindung bildet.

Der große wirtschaftliche Vorteil besteht darin, dass man ein einfaches Rohr auf das erforderliche Maß ablängt und mit dem Anschlussorgan verschließt. Das Rohr kann z. B. verzinkt sein. Eine Nachlackierung entfällt dann ebenfalls. Durch die unlösbare Verbindung wird ein wesentliches Problem aller Kunststoff-Metall-Verbindungen im Zusammenhang mit einem Kolben-Zylinder-Aggregat gelöst, das im Betrieb Temperaturschwankungen ausgesetzt ist. Kunststoff weist einen um den Faktor 10 größeren Ausdehnungskoeffizienten auf. Daraus ergeben sich Festigkeitsprobleme in der Verbindung zwischen dem Anschlussorgan und beispielsweise dem Zylinder. Durch den Hüllkörper werden die Probleme gelöst. Man kann die unlösbare Verbindung dadurch erreichen, indem man den Hüllkörper und das Anschlussorgan aus Kunststoff in einem Spritzverfahren miteinander verbindet. Alternativ kann der Hüllkörper geschlitzt ausgeführt und unter Vorspannung auf dem Anschlussorgan montiert sein, wobei dann Vorkehrungen getroffen sein müssen, um die Vorspannung zu halten, beispielsweise, indem man den Schlitz wieder verschweißt.

Die Formschlussverbindung zwischen dem Hüllkörper und einem Bauteil des Kolben-Zylinder-Aggregats lässt sich vergleichsweise einfach prozesssicher ausführen, so dass die Haltbarkeit der Formschlussverbindung über die Lebensdauer des Kolben-Zylinder-Aggregats gewährleistet ist.

In weiterer vorteilhafter Ausgestaltung weist der Hüllkörper im Querschnitt mindestens einen u-förmigen Teilquerschnitt auf, der sich in einer Nut des zylindrischen Befestigungsabschnitts des Anschlussorgans abstützt.

Dabei ist vorgesehen, dass zwei in Längsrichtung des Kolben-Zylinder-Aggregats beabstandete u-förmige Teilquerschnitte des Hüllkörpers über einen Steg miteinander verbunden sind. Der Steg stabilisiert die Position der u-förmigen Teilquerschnitte im Anschlussorgan.

Der Steg des Hüllkörpers steht stützend mit einer Innenmantelfläche an dem Bauteil des Kolben-Zylinder-Aggregats in Kontakt und verbessert damit die Kraftübertragung vom Anschlussorgan z. B. auf den Zylinder.

Das mit dem Anschlussorgan in Verbindung stehende Bauteil des Kolben-Zylinder-Aggregats ist mit dem mindestens einen u-förmigen Teilquerschnitt versickt. Ggf. kann zusätzlich eine Dichtung z. B. zur Abdichtung des Zylinderinnenraums eingesetzt werden.

An der Kolbenstange ein Anschlussorgan aus Kunststoff mittels eines topfförmigen Fixierelements befestigt ist, in dem das Anschlussorgan in einer Aufnahmeöffnung des Fixierelements axial gesichert ist. Das topfförmige Fixierelement übernimmt die Funktion des Zylinders am bodenseitigen Anschlussorgan.

Um einen weiteren Kostenvorteil zu erreichen, ist an der Kolbenstange ein identisches Anschlussorgan befestigt ist wie am Zylinder.

Gemäß einem vorteilhaften Unteranspruch weist das topfförmige Fixierelement einen Boden mit einer Durchgangsöffnung für die Kolbenstange auf, die an einer Stützfläche des Anschlussorgans anliegt. Druckkräfte zwischen der Kolbenstange und dem Anschlussorgan müssen also nicht allein vom Boden des Fixierelements aufgenommen werden.

Das topfförmige Fixierelement weist einen auf der Oberfläche der Kolbenstange anliegenden Zentrieransatz auf, so dass eine Desachsierung des Anschlussorgans zur Kolbenstange ausgeschlossen ist.

Zusätzlich kann das Anschlussorgan einen Aufnahmekonus für die Kolbenstange aufweisen.

Um ein Schweißverbindung zwischen dem Fixierelement und der Kolbenstange möglichst zu vermeiden, bildet der Zentrieransatz über mindestens eine radiale Verformung mit mindestens einer Nut der Kolbenstange eine axiale Sicherungsverbindung.

Die radiale Verformung wird von einer Abwinkelung gebildet, die mit ihrer in Längsrichtung des Zylinders weisenden Stirnfläche an einer Seitenwand der Nut innerhalb der Kolbenstange zur Anlage kommt.

Für eine besonders hohe Kraftaufnahme in beide axialen Belastungsrichtungen wird die Abwinkelung von mindestens zwei im Zentrieransatz freigeschnittenen Laschen gebildet, die wechselseitig an beabstandeten Nutseitenflächen der Kolbenstange zur Anlage kommen.

Bei Zugkräften wird bei Anschlussorgan im Bereich der Durchgangsöffnung für eine Lagerbuchse sehr hoch belastet. Gewöhnlich würde man im Bereich der größten radialen Ausdehnung der Durchgangsöffnung eine vergrößerte Wandstärke am Anschlussorgan vorsehen. Diese erhöhte Wandstärke ist aber durch den Materialverbrauch nachteilig. Ebenso verschlechtert sich durch die Materialanhäufung die Herstellbarkeit. Deshalb weist das Anschlussorgan eine Durchgangsöffnung für die Lagerbuchse auf, die in Richtung der Längsachse des Kolben-Zylinder-Aggregats eine größere Ausdehnung aufweist als in Querrichtung. Umfangreiche Versuche haben den überraschenden Effekt bestätigt, dass z. B. mit einer elliptischen Durchgangsöffnung eine drastische Spannungsreduzierung im Bereich der Durchgangsöffnung erreicht wurde.

Anhand der folgenden Figurenbeschreibung soll die Erfindung näher erläutert werden.

Es zeigt:
- Fig. 1 und 2: Querschnitt durch ein Kolben-Zylinder-Aggregat in zwei um 90° verdrehten Ebenen
- Fig. 3: bodenseitiges Anschlussorgan in einer Ausschnittvergrößerung
- Fig. 4: kolbenstangenseitiges Anschlussorgan in einer Ausschnittvergrö- ßerung

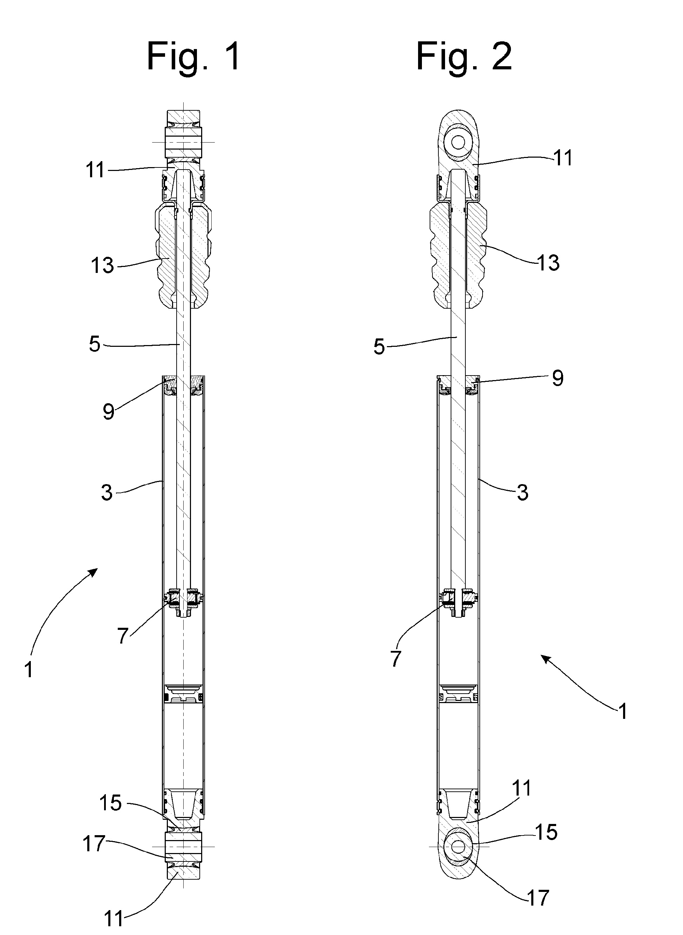

Die Figuren 1 und 2 zeigen den prinzipiellen Aufbau eines Kolben-Zylinder-Aggregats 1 in der Bauform eines Schwingungsdämpfers in der Einrohrbauform. Generell ist die Erfindung jedoch nicht auf diese Anwendungsform beschränkt.

In einem Zylinder 3, der von einem einfachen abgelängten Rohr gebildet werden kann, ist eine Kolbenstange 5 mit einem Kolben 7 axial beweglich gelagert. Ein erstes Ende des Zylinders 3 wird von einer Kolbenstangenführung 9 verschlossen. Am anderen Ende ist ein bodenseitiges Anschlussorgan 11 montiert.

Auch an der Kolbenstange 5 ist ein Anschlussorgan 11 befestigt, wobei sich ein Anschlagpuffer 13 an dem Anschlussorgan abstützen kann. Beide Anschlussorgane 13 sind als Drehgelenke ausgeführt und weisen eine Durchgangsöffnung 15 für eine Lagerbuchse 17 auf.

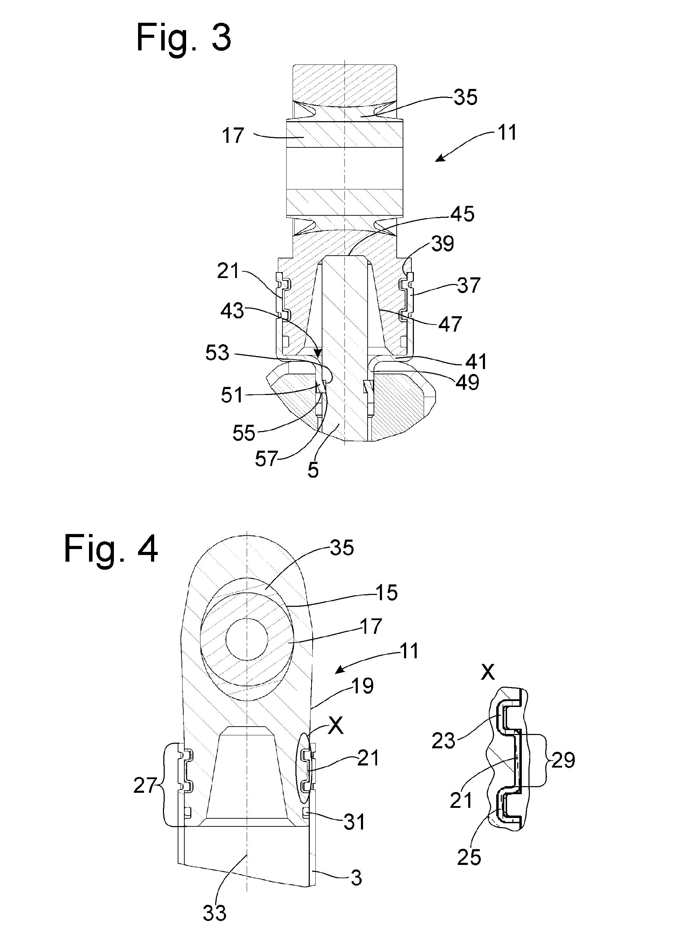

In der Fig. 3 ist das bodenseitige Anschlussorgan 11 vergrößert dargestellt. Das Anschlussorgan 11 besteht aus Kunststoff und weist auf seiner äußeren Mantelfläche 19 einen Hüllkörper 21 auf, der unlösbar mit dem Anschlussorgan 11 verbunden ist. Der Hüllkörper 21 besteht aus einem Metallstreifen, der mindestens einen, in diesem Ausführungsbeispiel, zwei u-förmige Teilquerschnitte 23 aufweist, die in Nuten 25 eines zylindrischen Befestigungsabschnitts 27 des Anschlussorgans 11 eingreifen und den Hüllkörper 21 damit am Befestigungsabschnitt 27 abstützen.

Die beiden beabstandeten u-förmigen Teilquerschnitte 23 des Hüllkörpers 21 sind über einen Steg 29 miteinander verbunden. Der Außendurchmesser des Stegs 29 entspricht dem Außendurchmesser des Befestigungsabschnitts 27 des Anschlussorgans 11, so dass der Steg 29 des Hüllkörpers 21 stützend mit einer Innenmantelfläche, in dem Fall dem zu verbindenden Bauteil des Zylinders, in Kontakt steht.

Die von den u-förmigen Teilquerschnitten 23 des Hüllkörpers 21 gebildete, in Richtung der Innenmantelfläche des Zylinders 3 weisende Profilierung ist mit dem Zylinder 3 versickt und bildet damit eine Formschlussverbindung, die das Anschlussorgan 11 im Zylinder 3 fixiert. Zur Abdichtung des Zylinders kann noch eine Ringdichtung 31 eingesetzt werden.

Des Weiteren ist aus der Fig. 3 ersichtlich, dass die Durchgangsöffnung 15 in dem Anschlussorgan 11 für die Lagerbuchse 17 in Richtung der Längsachse 33 des Koiben-Zylinder-Aggregats 1 eine größere Ausdehnung aufweist als in Querrichtung. Bei einer Lagerbuchse 17 mit konstanter Wandstärke entsteht ein sichelförmiger Raum, der mit einem Elastomer 35 ausgefühlt sein kann.

In der Fig. 4 ist ein Anschlussorgan 11 aus Kunststoff an der Kolbenstange 5 mittels eines topfförmigen Fixierelements 37 als verbindendes Bauteil 37 befestigt. Das topfförmige Fixierelement 37 verfügt über eine Aufnahmeöffnung 39, in der das Anschlussorgan 11 nach demselben Prinzip fixiert ist, wie das bodenseitige Anschlussorgan 11, also auch mit einem Hüllkörper 21, der unlösbar mit dem Anschlussorgan 11 verbunden ist. Die Aufnahmeöffnung 37 und der Zylinder 3 weisen einen identischen Innendurchmesser auf. Deshalb kann an der Kolbenstange 5 ein identisches Anschlussorgan 11 befestigt sein, wie am Zylinder 3.

Das topfförmige Fixierelement 37 weist einen Boden 41 mit einer Durchgangsöffnung 43 für die Kolbenstange 5 auf, die an einer Stützfläche 45 des Anschlussorgans 11 anliegt. Die Kolbenstange 5 kann sich in einem Aufnahmekonus 47 des Anschlussorgans 11 zentrieren. Zur Befestigung des Fixierelements 37 weist dieses einen hülsenförmigen Zentrieransatz 49 auf, der auf der Oberfläche der Kolbenstange 5 anliegt. Der Zentrieransatz 49 bildet über mindestens eine radiale Verformung 51 mit mindestens einer Nut 53 in der Kolbenstange 5 eine axiale Sicherungsverbindung. Die radiale Verformung 51 wird von einer Abwinklung gebildet, die mit ihrer in Längsrichtung des Kolben-Zylinder-Aggregats weisenden Stirnfläche 55 an einer Seitenwand 37 der Nut 57 innerhalb der Kolbenstange 5 zur Anlage kommt.

Ggf. kann die Abwinklung 51 auch von mindestens zwei im Zentrieransatz freigeschnittenen Laschen gebildet werden, die wechselseitig an den beabstandeten Seitenflächen 57 der Nut 53 zur Anlage kommen und somit Zug- und Druckkräfte gleichermaßen gut vom Anschlussorgan 11 aufgenommen werden können.

Vorab zur Montage wird das Anschlussorgan 11 in einem Spritzverfahren hergestellt. Der Hüllkörper 21 wird dabei in die Spritzform eingelegt, so dass eine unlösbare Verbindung erreicht wird. Gleichzeitig lässt sich die Lagerbuchse 17 einlegen und die sichelförmigen Elastomerkörper 35 können mittels eines Zwei-Komponenten-Spritzverfahrens hergestellt werden. Das nun vorliegende Anschlussorgan 11 kann abhängig von der Anwendung mit dem Zylinder 3 oder mit dem Fixierelement 37 versickt werden.

### Bezugszeichenliste

- 1: Kolben-Zylinder-Aggregat
- 3: Zylinder
- 5: Kolbenstange
- 7: Kolben
- 9: Kolbenstangenführung
- 11: Anschlussorgan
- 13: Anschlagpuffer
- 15: Durchgangsöffnung
- 17: Lagerbuchse
- 19: äußere Mantelfläche
- 21: Hüllkörper
- 23: Teilquerschnitte
- 25: Nuten
- 27: Befestigungsabschnitt
- 29: Steg
- 31: Ringdichtung
- 33: Längsachse
- 35: Elastomer
- 37: Fixierelement
- 39: Aufnahmeöffnung
- 41: Boden
- 43: Durchgangsöffnung
- 45: Stützfläche
- 47: Aufnahmekonus
- 49: Zentrieransatz
- 51: radiale Verformung
- 53: Nut in Kolbenstange
- 55: Stirnfläche
- 57: Seitenwand

## Patentansprüche

1. Kolben-Zylinder-Aggregat (1), umfassend einen Zylinder (3), in dem eine Kolbenstange (5) axial beweglich gelagert ist, und an einem Ende des Zylinders (3) ein Anschlussorgan aus Kunststoff formschlüssig mit dem Zylinder axial fixiert ist, wobei das Anschlussorgan (11) einen zylindrischen Befestigungsabschnitt (27) aufweist, an dem die formschlüssige Verbindung mit einem zu verbindenden Bauteil (3; 37) des Kolben-Zylinder-Aggregats ausgeführt ist,
**dadurch gekennzeichnet,**
**dass** der zylindrische Befestigungsabschnitt (27) des Anschlussorgans (11) auf seiner äußeren Mantelfläche (19) einen Hüllkörper (21) aufweist, der unlösbar mit dem Anschlussorgan (11) verbunden ist, und auf seiner äußeren Oberfläche eine Profilierung (23) aufweist, die mit einem Bauteil (3; 37) des Kolben-Zylinder-Aggregats (1) eine Formschlussverbindung bildet.

2. Kolben-Zylinder-Aggregat nach Anspruch 1,
**dadurch gekennzeichnet,**
**dass** der Hüllkörper (21) im Querschnitt mindestens einen u-förmigen Teilquerschnitt (23) aufweist, der sich in einer Nut (25) des zylindrischen Befestigungsabschnitts (19) des Anschlussorgans (11) abstützt.

3. Kolben-Zylinder-Aggregat nach Anspruch 2,
**dadurch gekennzeichnet,**
**dass** zwei in Längsrichtung des Kolben-Zylinder-Aggregats (1) beabstandete u-förmige Teilquerschnitt (23) des Hüllkörpers (21) über einen Steg (29) miteinander verbunden sind.

4. Kolben-Zylinder-Aggregat nach Anspruch 3,
**dadurch gekennzeichnet,**
**dass** der Steg (29) des Hüllkörpers (21) stützend mit einer Innenmantelfläche des zu verbindenden Bauteils (3; 37) des Kolben-Zylinder-Aggregats (1) in Kontakt steht.

5. Kolben-Zylinder-Aggregat nach Anspruch 2,
**dadurch gekennzeichnet,**
**dass** das zu verbindende Bauteil (3; 37) des Kolben-Zylinder-Aggregats (1) mit dem mindestens einen u-förmigen Teilquerschnitt (23) versickt ist.

6. Kolben-Zylinder-Aggregat nach Anspruch 1,
**dadurch gekennzeichnet,**
**dass** an der Kolbenstange (5) ein Anschlussorgan (11) aus Kunststoff mittels eines topfförmigen Fixierelements (37) befestigt ist, in dem das Anschlussorgan (11) in einer Aufnahmeöffnung (39) des Fixierelements (37) axial gesichert ist.

7. Kolben-Zylinder-Aggregat nach Anspruch 6,
**dadurch gekennzeichnet,**
**dass** an der Kolbenstange (5) ein identisches Anschlussorgan (11) befestigt ist wie am Zylinder (3).

8. Kolben-Zylinder-Aggregat nach Anspruch 6,
**dadurch gekennzeichnet,**
**dass** das topfförmige Fixierelement (37) einen Boden (41) mit einer Durchgangsöffnung (43) für die Kolbenstange (5) aufweist, die an einer Stützfläche (45) des Anschlussorgans (11) anliegt.

9. Kolben-Zylinder-Aggregat nach Anspruch 6,
**dadurch gekennzeichnet,**
**dass** das topfförmige Fixierelement (37) einen auf der Oberfläche der Kolbenstange (5) anliegenden Zentrieransatz (49) aufweist.

10. Kolben-Zylinder-Aggregat nach Anspruch 6,
**dadurch gekennzeichnet,**
**dass** das Anschlussorgan (11) einen Aufnahmekonus (47) für die Kolbenstange (5) aufweist.

11. Kolben-Zylinder-Aggregat nach Anspruch 9,
**dadurch gekennzeichnet,**
**dass** der Zentrieransatz (49) über mindestens eine radiale Verformung (51) mit mindestens einer Nut (53) der Kolbenstange (5) eine axiale Sicherungsverbindung bildet

12. Kolben-Zylinder-Aggregat nach Anspruch 11,
**dadurch gekennzeichnet,**
**dass** die radiale Verformung (51) von einer Abwinkelung gebildet wird, die mit ihrer in Längsrichtung des Kolben-Zylinder-Aggregats (1) weisenden Stirnfläche (55) an einer Seitenwand (57) der Nut (53) innerhalb der Kolbenstange zur Anlage kommt.

13. Kolben-Zylinder-Aggregat nach Anspruch 12,
**dadurch gekennzeichnet,**
**dass** die Abwinkelung von mindestens zwei im Zentrieransatz (49) freigeschnittenen Laschen gebildet wird, die wechselseitig an beabstandeten Nutseitenflächen (57) zur Anlage kommen.

14. Kolben-Zylinder-Aggregat nach Anspruch 1,
**dadurch gekennzeichnet,**
**dass** das Anschlussgelenk(11) eine Durchgangsöffnung (15) für eine Lagerbuchse (17) aufweist, wobei die Durchgangsöffnung (15) in Richtung der Längsachse (33) des Kolben-Zylinder-Aggregats (1) eine größere Ausdehnung aufweist als in Querrichtung.
